# EUROPÄISCHE PATENTANMELDUNG

(11) **EP 3 428 791 A1**
(43) Veröffentlichungstag der Anmeldung: **16.01.2019**
(21) Anmeldenummer: 17180875.1
(22) Anmeldetag: 12.07.2017
(51) Int. Cl.: G06F 8/75, G06F 11/36, G05B 19/02

(54) **VERFAHREN ZUM BEREITSTELLEN EINER PROGRAMMFUNKTION ZUM STEUERN EINES ELEKTRISCHEN GERÄTS, SOWIE SPEICHERMEDIUM**

(71) Anmelder: Siemens Aktiengesellschaft, 80333 München (DE)
(72) Erfinder: Kessler, William, 90473 Nürnberg (DE); Zatocil, Heiko, 90469 Nürnberg (DE)

(57) **Zusammenfassung**

Die Erfindung betrifft ein Verfahren zum Bereitstellen einer Programmfunktion (7) zum Steuern eines elektrischen Geräts (3). Um die Bereitstellung der Programmfunktion (7) zum Steuern des elektrischen Geräts (3) aus einer Funktionsbibliothek (41) zu verbessern sind folgende Schritte vorgesehen:
- Analysieren (S1) eines Programmcodes (5), welcher aus einer Nutzereingabe empfangen wird, auf ein Funktionsmuster (6) hin durch eine Analyseeinrichtung (21), wobei durch das Funktionsmuster (6) eine Funktion (40) des elektrischen Geräts (3) steuerbar ist,
- Abrufen (S2) der Programmfunktion (7) und/oder einer Signatur (8), welche die Programmfunktion (7) charakterisiert, aus einer Datenbankeinrichtung (4),
- Überprüfen, ob die Funktion des elektrischen Geräts (3) mittels der Programmfunktion (7) steuerbar ist, durch Ermitteln (S3') eines Grads der Übereinstimmung zwischen dem Funktionsmuster (6) in dem analysierten Programmcode (5) und der Programmfunktion (7) anhand der abgerufenen Programmfunktion (7) und/oder der Signatur (8) mittels einer Prüfeinrichtung (22), und
- Ausgeben (S5) einer Meldung durch eine Ausgabeeinrichtung (23) und/oder Bereitstellen (S6) der Programmfunktion (7), wenn der Grad der Übereinstimmung zwischen der Programmfunktion (7) und dem Funktionsmuster (6) des analysierten Programmcodes (5) ein vorbestimmtes Maß überschreitet.

## Beschreibung

Die Erfindung betrifft ein Verfahren zum Bereitstellen einer Programmfunktion zum Steuern eines elektrischen Geräts. Die Erfindung betrifft außerdem ein Speichermedium mit einem Computerprogramm.

Eine Vielzahl elektrischer Geräte kann durch einen Programmcode gesteuert werden. Beispiele für elektrische Geräte sind eine Produktionsanlage, ein Steuergerät für ein Kraftfahrzeug oder ein mobiles Endgerät. Dabei ist der Programmcode üblicherweise spezifisch für das elektrische Gerät. Trotz des spezifischen Programmcodes und der Vielzahl unterschiedlicher elektrischer Geräte, können Funktionsmuster in dem Programmcode, unter Umständen leicht angepasst, zum Steuern unterschiedlicher elektrischer Geräte verwendet werden.

Vollständig programmierte und validierte (getestete) Funktionsmuster aus bereits programmierten Programmcodes können gesammelt als Programmfunktionen in einer Funktionsbibliothek gespeichert werden. Somit kann ein Nutzer beim Programmieren eines neuen Programmcodes auf die gesammelten Programmfunktionen aus der Funktionsbibliothek zurückgreifen. Findet er eine Programmfunktion, welche für eine Anwendung in dem Programmcode passend ist, so kann der Nutzer diese Programmfunktion für die Verwendung in dem neuen Programmcode verwenden und optionalerweise unter Umständen anpassen. Auf diese Weise kann ein erheblicher Anteil des Programmierungsaufwandes und Validierungsaufwandes entfallen. Häufig stellen der Aufwand für die Programmierung sowie der Aufwand für die Validierung eines Programmcodes jeweils etwa die Hälfte des Entwicklungsaufwands für einen Programmcode dar. Somit kann durch Nutzung einer bereits vorliegenden Programmfunktion aus der Funktionsbibliothek erheblicher Entwicklungsaufwand eingespart werden.

Die Vorteile der Funktionsbibliothek kommen jedoch nur dann zum Tragen, wenn der Nutzer mit sinnvollem Aufwand in der Lage ist, die passende Programmfunktion zu finden. Geht der Nutzer in einem Beispiel fälschlicherweise davon aus, dass für einen bestimmten Zweck keine passende Programmfunktion vorliegt, so würde er das entsprechende Funktionsmuster des Programmcodes selbst umsetzen. Hierdurch fällt unnötiger Programmierungsaufwand und Validierungsaufwand an. Dies gilt ebenfalls, wenn der Nutzer die passende Programmfunktion zu spät entdeckt.

Es ist somit Aufgabe der vorliegenden Erfindung, die Bereitstellung einer Programmfunktion zum Steuern eines elektrischen Geräts aus einer Funktionsbibliothek zu verbessern.

Diese Aufgabe wird erfindungsgemäß gelöst durch die Gegenstände der unabhängigen Patentansprüche. Vorteilhafte Ausführungsformen mit zweckmäßigen Weiterbildungen sind Gegenstand der Unteransprüche.

Die Erfindung geht von einem Verfahren zum Bereitstellen einer Programmfunktion zum Steuern eines elektrischen Geräts mit folgenden Schritten aus:
- Analysieren eines Programmcodes, welcher aus einer Nutzereingabe empfangen wird, auf ein Funktionsmuster hin durch eine Analyseeinrichtung, wobei durch das Funktionsmuster eine Funktion des elektrischen Geräts steuerbar ist,
- Abrufen einer Programmfunktion und/oder einer Signatur, welche die Programmfunktion charakterisiert, aus einer Datenbankeinrichtung,
- Überprüfen, ob die Funktion des elektrischen Geräts mittels der Programmfunktion steuerbar ist, durch Ermitteln eines Grads der Übereinstimmung zwischen dem Funktionsmuster in dem analysierten Programmcode und der Programmfunktion anhand der abgerufenen Programmfunktion und/oder der Signatur mittels einer Prüfeinrichtung, und
- Ausgeben einer Meldung und/oder Bereitstellen der Programmfunktion durch eine Ausgabeeinrichtung, wenn der Grad der Übereinstimmung zwischen der Programmfunktion und dem Funktionsmuster des analysierten Programmcodes ein vorbestimmtes Maß überschreitet. Im Folgenden wird die Programmfunktion als "passend" bezeichnet, wenn der Grad der Übereinstimmung zwischen der Programmfunktion und dem Funktionsmuster das vorbestimmte Maß überschreitet.

Der Programmcode wird aus einer Nutzereingabe eines Nutzers empfangen. Somit kann vorgesehen sein, dass der Nutzer den Programmcode bereitstellt beziehungsweise programmiert. Das Analysieren des Programmcodes kann bei oder nach Fertigstellung des Programmcodes stattfinden. Vorzugsweise findet das Analysieren des Programmcodes jedoch vor dessen Fertigstellung statt.

Das Funktionsmuster kann eine, insbesondere nicht vollständig programmierte, weitere Programmfunktion darstellen. Mit anderen Worten kann das Funktionsmuster zum Implementieren der weiteren Programmfunktion programmiert werden. Wenn die Programmfunktion passend ist, ist eine Programmierung beziehungsweise Implementierung der weiteren Programmfunktion nicht nötig. Stattdessen kann es vorteilhaft sein, die Programmfunktion in den Programmcode zu implementieren. Dabei kann unter Umständen die Programmfunktion derart an den Programmcode und den Verwendungszweck, insbesondere das elektrische Gerät, angepasst werden dass die Programmfunktion anstatt der weiteren Programmfunktion genutzt werden kann. Auf diese Weise entfällt Entwicklungsaufwand zum Entwickeln der weiteren Programmfunktion.

Das Funktionsmuster kann eine Art und Weise vorgeben, das elektrische Gerät anzusteuern. Insbesondere ist durch das Funktionsmuster ein gewünschtes Wirken des Programmcodes auf die Funktion des elektrischen Geräts unter einer oder mehreren vorgegebenen Bedingungen vorgegeben. Das Wirken des Funktionsmusters auf die Funktion des elektrischen Geräts kann durch ein Ausgangsverhalten des Funktionsmusters vorgegeben werden. Die vorgegebenen Bedingungen, bei deren Vorliegen sich das Wirken des Funktionsmusters auf die Funktion des elektrischen Geräts entfalten soll, können durch ein Eingangsverhalten des Funktionsmusters vorgegeben sein. Das Wirken der Funktionsmusters auf die Funktion des elektrischen Geräts kann alternativ oder zusätzlich durch eingehende Signale und/oder Werte vorgegeben werden. Beispielsweise hängt das Ausgangsverhalten des Funktionsmusters von den eingangsseitig dem Funktionsmuster bereitgestellten Signalen eingehenden Signalen und/oder Werten ab. Durch entsprechendes Vorgeben des Eingangsverhaltens und/oder Ausgangsverhaltens kann das Wirken des Funktionsmusters auf die Funktion des elektrischen Geräts im Einzelfall abgestimmt werden.

Die Funktion des elektrischen Geräts kann jegliche Funktionalitäten oder Teilfunktionalitäten des elektrischen Geräts betreffen. Beispiele für Funktionen des elektrischen Geräts sind Speicherzugriffe, die Durchführung von Rechenoperationen und oder die Ansteuerung nach außen wirkender Hardware (beispielsweise Kamera oder Greifer). Der Programmcode kann die Steuerung einer Vielzahl an Funktionen des elektrischen Geräts steuern. Das Funktionsmuster kann einen Teil des Programmcodes zur Steuerung der Funktion ersetzen.

Die Analyseeinrichtung kann als lokale Recheneinheit, welche den Programmcode aus der Nutzereingabe empfängt, ausgebildet sein. Insbesondere ist die lokale Recheneinheit Teil eines Personalcomputers ("Client computing device"). Der Personalcomputer kann außerdem Eingabegeräte und/oder Anzeigegeräte zur Interaktion mit dem Nutzer aufweisen. Das Anzeigegerät kann die Ausgabeeinrichtung ausbilden. In anderen Ausführungsformen kann die Analyseeinrichtung Teil einer Servereinrichtung, beispielsweise eines Datenbankservers oder einer sogenannten Cloud, sein. Insbesondere sind die Servereinrichtung und die lokale Recheneinheit beziehungsweise der Personalcomputer räumlich getrennt. Die Servereinrichtung kann den Programmcode und/oder die Nutzereingabe aus der lokalen Recheneinheit empfangen.

Beim Abrufen der Programmfunktion wird diese beispielsweise durch die lokale Recheneinheit oder die Servereinrichtung aus der Funktionsbibliothek abgerufen. Die Funktionsbibliothek kann in der Servereinrichtung gespeichert sein.

Das Überprüfen, ob die Funktion des elektrischen Geräts mittels der Programmfunktion steuerbar ist, kann beispielsweise durch die lokale Recheneinheit oder die Servereinrichtung durchgeführt werden. Je nachdem kann die Prüfeinrichtung beispielsweise Teil der lokalen Recheneinheit oder der Servereinrichtung sein. Die Funktion des elektrischen Gerätes ist beispielsweise genau dann durch die Programmfunktion steuerbar, wenn das Wirken des Funktionsmusters auf das elektrische Gerät und das Wirken der Programmfunktion auf das elektrische Gerät ähnlich sind. Dieses insbesondere genau dann der Fall, wenn der Grad der Übereinstimmung das vorbestimmte Maß überschreitet.

In einem umso früheren Entwicklungsstadium des Programmcode beziehungsweise des Funktionsmusters die passende Programmfunktion erkannt und/oder bereitgestellt wird, umso größer ist das Einsparungspotenzial beim Programmieren des Programmcodes. Deshalb wird das Analysieren vorteilhafterweise in einem frühen Entwicklungsstadium des Programmcodes durchgeführt.

Durch Ausgeben der Meldung kann dem Nutzer vorgeschlagen werden, die Programmfunktion aus der Funktionsbibliothek zum Steuern der Funktion des elektrischen Geräts zu nutzen. Mit anderen Worten kann die Meldung den Hinweis enthalten, dass die Programmfunktion als passend zum Steuern der Funktion des elektrischen Geräts ermittelt wurde. Dadurch wird dem Nutzer die Möglichkeit geboten, über die Nutzung der Programmfunktion aus der Funktionsbibliothek zu entscheiden.

Eine Weiterbildung sieht vor, dass als Teil der Meldung eine Dokumentation der Programmfunktion aus der Datenbankeinrichtung ausgegeben wird. Die Datenbankeinrichtung kann Teil der Servereinrichtung sein. Insbesondere beschreibt die Dokumentation das Wirken der Programmfunktion auf das technische Gerät. Die Dokumentation kann hierzu beispielsweise das Eingangsverhalten und/oder Ausgangsverhalten der Programmfunktion beschreiben. Auf diese Weise wird dem Nutzer ermöglicht, anhand der Dokumentation die Programmfunktion an den Programmcode und/oder das elektrische Gerät anzupassen.

Eine Weiterbildung sieht vor, dass die Signatur einen Einfluss der Programmfunktion auf das technische Gerät, insbesondere basierend auf einem Eingangsverhalten und/oder Ausgangsverhalten der Programmfunktion, beschreibt. Der Einfluss der Programmfunktion auf das technische Gerät kann dem Wirken der Programmfunktion auf das technische Gerät entsprechen. Die Signatur kann somit das Wirken der Programmfunktion auf das elektrische Gerät charakterisieren. Dadurch ist ein erleichtertes Ermitteln des Grades der Übereinstimmung möglich. Insbesondere muss beim Überprüfen nicht erst das Wirken des Programmcodes auf das elektrische Gerät ermittelt werden.

Eine Weiterbildung sieht vor, dass der Programmcode während dessen Programmierung wiederholt durch die Analyseeinrichtung analysiert wird. Mit anderen Worten findet das Analysieren bereits statt, während der Programmcode durch die Nutzereingabe programmiert wird. Insbesondere wird der Programmcode in regelmäßigen Abständen und/oder jeweils nach einer vorgegebenen Anzahl an durch den Nutzer mittels der Nutzereingabe eingegebenen Zeichen oder Befehlen analysiert.

Hierdurch ist die Möglichkeit gegeben, die passende Programmfunktion in einem besonders frühen Entwicklungsstadium bereitzustellen.

Eine Weiterbildung sieht vor, dass beim Analysieren des Programmcodes ein unvollständiger Anteil des Programmcodes prognostiziert wird. Mit anderen Worten wird der Programmcode vor dessen Fertigstellung analysiert. Um eine umfassende Analyse und/oder das Ermitteln des Grad der Übereinstimmung zwischen dem Funktionsmusters und der Programmfunktion zu ermöglichen, werden die unvollständigen Anteile des Programmcodes prognostiziert. Beispielsweise wird beim Prognostizieren Füll-Code und/oder sogenannter toter Code in den Programmcode integriert. Der Füll-Code und/oder der tote Code kann dabei derart ausgestaltet sein, dass die Ausführbarkeit des Programmcodes gewährleistet ist. Um eine besonders einfache Ausgestaltung des Füll-Codes und/oder des toten Codes zu gewährleisten, kann dieser unwirksam auf das elektrische Gerät gestaltet sein. Mit anderen Worten findet kein Wirken auf das elektrische Gerät seitens des Füll-Codes und/oder des toten Codes statt.

Eine Weiterbildung sieht vor, dass beim Analysieren ein unvollständig in den Programmcode implementiertes Funktionsmuster prognostisch als das Funktionsmuster erkannt wird. Mit anderen Worten, wird das Funktionsmusters erkannt, auch wenn es noch nicht fertig implementiert ist. Beispielsweise wird ein Funktionsprinzip für das Funktionsmuster prognostisch anhand des unvollständigen Funktionsmusters erkannt. Beispielsweise wird anhand des unvollständigen Funktionsmusters ermittelt, welches Wirken auf das elektrische Gerät das Funktionsmuster nach dessen Fertigstellung erzielen soll. Auf diese Weise ist das Analysieren des Programmcode in einem besonders frühen Entwicklungsstadium möglich.

Eine Weiterbildung sieht vor, dass beim Analysieren des Programmcodes das Wirken des Funktionsmusters auf die

Funktion des elektrischen Geräts ermittelt wird und der Grad der Übereinstimmung zwischen der Programmfunktion und dem Funktionsmuster höchstens dann das vorbestimmtes Maß überschreitet, wenn das jeweilige Wirken des Funktionsmusters und der Programmfunktion auf die Funktion des elektrischen Geräts maximal um ein erstes weiteres vorbestimmtes Maß voneinander abweichen. Mit anderen Worten wird das Wirken des Funktionsmusters auf das elektrische Gerät sowie das Wirken der Programmfunktion auf die Funktion des elektrischen Geräts jeweils untersucht und verglichen. Beispielsweise erfolgt das Untersuchen des jeweiligen Wirkens durch Simulation. Auf diese Weise kann zielgerichtet anhand der Funktion des elektrischen Geräts die passende Programmfunktion gefunden werden.

Eine Weiterbildung sieht vor, dass beim Analysieren eine Anzahl an Eingangsgrößen und/oder Ausgangsgrößen für den Programmcode ermittelt wird und der Grad der Übereinstimmung zwischen der Programmfunktion und dem Funktionsmuster höchstens dann das vorbestimmte Maß überschreitet, wenn die Anzahl an Eingangsgrößen und/oder Ausgangsgrößen der Programmfunktion und des Funktionsmusters übereinstimmen. Die Anzahl an Eingangsgrößen und/oder Ausgangsgrößen kann eine besonders einfache Möglichkeit sein, die passende Programmfunktion aus einer Vielzahl an Programmfunktionen zu ermitteln. Beispielsweise können auf diese Weise weitere Programmfunktionen, die aufgrund der Anzahl der Eingangsgrößen und/oder Ausgangsgrößen nicht passend sein können, leicht herausgefiltert werden.

Eine Weiterbildung sieht vor, dass dem Programmcode beim Analysieren Testwerte zugeführt werden und erste Ausgangswerte, welche durch den Programmcode aus den Testwerten gebildet werden, mit zweiten Ausgangswerten, welche durch die Programmfunktion aus den Testwerten gebildet werden, verglichen werden, wobei der Grad der Übereinstimmung zwischen der Programmfunktion und dem Funktionsmuster höchstens dann das vorbestimmte Maß überschreitet, wenn die ersten Ausgangswerte und die zweiten Ausgangwerte maximal um ein zweites weiteres vorbestimmtes Maß voneinander abweichen. Auf diese Weise kann eine besonders genaue Simulation beziehungsweise Ermittlung des Grad der Übereinstimmung durchgeführt werden. Somit können dem Nutzer besonders treffsicher Vorschläge für die Programmfunktion zum Steuern der Funktion des technischen Geräts gemeldet werden.

Eine Weiterbildung sieht vor, dass in einem zweistufigen Verfahren zunächst die Anzahl an Eingangsgrößen und/oder Ausgangsgrößen zwischen dem Programmcode und der Programmfunktion vergleichen wird und nur bei deren Übereinstimmung die ersten Ausgangswerte und die zweiten Ausgangwerte verglichen werden. Durch Kombination der beiden oben genannten Weiterbildungen, kann die passende Programmfunktion besonders ökonomisch und treffsicher ermittelt werden. Dabei stellt das Vergleichen der Anzahl an Eingangsgrößen und/oder Ausgangsgrößen ein besonders einfaches und wenig rechenintensives Verfahren zum Herausfiltern unpassender Programmfunktionen dar. Das deutlich rechenintensivere Ermitteln des Grads der Übereinstimmung durch Zuführen von Testwerten kann dann auf besonders aussichtsreiche der weiteren Programmfunktionen beschränkt werden.

Die Aufgabe wird außerdem gelöst durch ein Speichermedium mit einem Computerprogramm, welches dazu ausgebildet ist, ein Verfahren nach einer der oben genannten Ausführungsformen zu steuern. Bei dem Speichermedium handelt es sich beispielsweise um die Festplatte einer Recheneinheit, einen USB Stick einen Arbeitsspeicher der Recheneinheit oder ein optisches Medium, beispielsweise eine CD-ROM.

Weitere Merkmale und Vorteile sind der folgenden Beschreibung anhand der beigefügten Figuren zu entnehmen. In den Figuren bezeichnen gleiche Bezugszeichen gleiche Merkmale und Funktionen. Die Ausführungsbeispiele dienen lediglich der Erläuterung der Erfindung und sollen diese nicht beschränken.

Es zeigen:
- FIG 1: beispielhaft eine Infrastruktur zum Ausführen einer Ausführungsform des erfindungsgemäßen Verfahrens in einem Blockdiagramm;
- FIG 2: in einem Blockdiagramm eine Übersicht über eine Programmfunktion und ein Funktionsmuster eines Programmcodes; und
- FIG 3: ein Ablaufdiagramm einer Ausführungsform des erfindungsgemäßen Verfahrens.

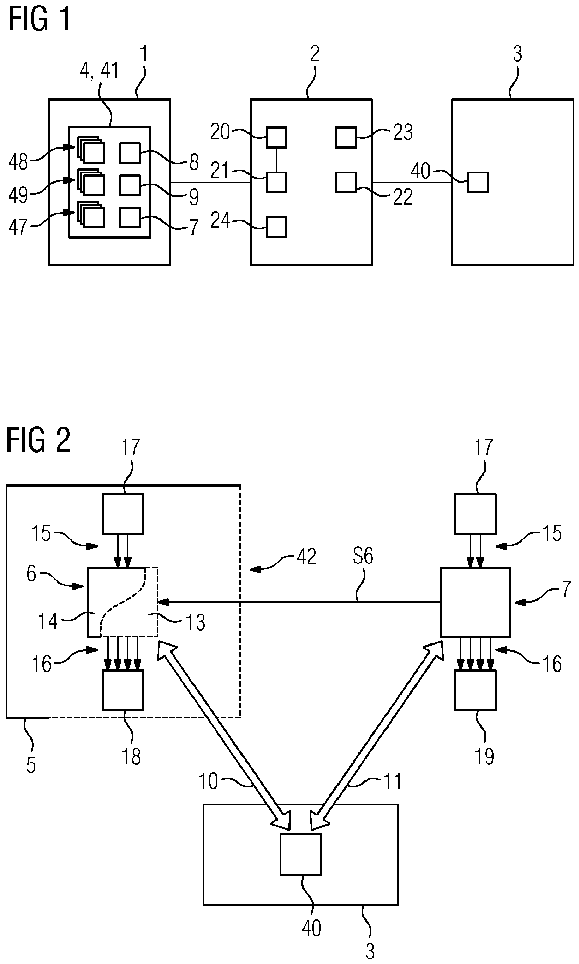

FIG 1 zeigt eine Servereinrichtung 1, einen Personalcomputer 2 (Client computing device) sowie ein elektrisches Gerät 3. Die Servereinrichtung 1 stellt dabei insbesondere einen von dem Personalcomputer 2 räumlich getrennten Server oder eine Cloud dar. Der Personalcomputer 2 bietet die Möglichkeit, einen Programmcode 5 zum Steuern des elektrischen Geräts 3 bereitzustellen. Dabei kann ein Funktionsmuster 6 des Programmcodes 5 dazu vorgesehen sein, eine Funktion 40 des elektrischen Geräts 3 auf vorbestimmte Art und Weise zu steuern. Mit anderen Worten kann das Funktionsmuster 6 dazu ausgebildet sein, auf das elektrische Gerät 3 beziehungsweise dessen Funktion 40 auf vorbestimmte Weise einzuwirken 10.

Der Personalcomputer 2 umfasst eine Eingabevorrichtung 20, eine Analyseeinrichtung 21, eine Prüfeinrichtung 22 sowie eine Ausgabeeinrichtung 23. Der Programmcode 5 kann mittels der Eingabevorrichtung 20, beispielsweise einer Tastatur und/oder Maus, aus einer Nutzereingabe empfangen werden. Beispielsweise wird der Programmcode 5 durch die Nutzereingabe programmiert.

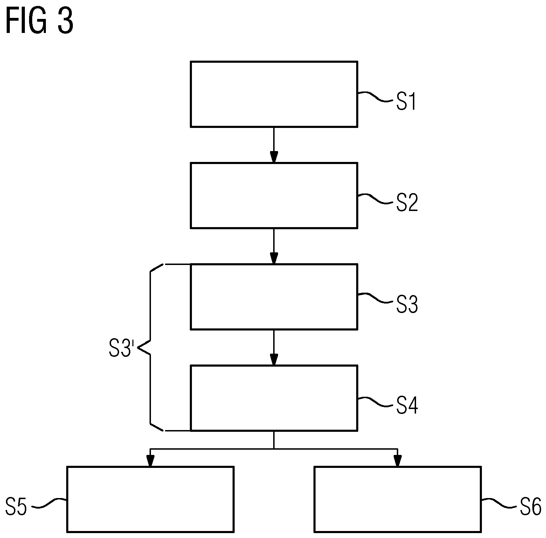

Gemäß FIG 3 wird in einem ersten Verfahrensschritt S1 der Programmcode 5, der aus der Nutzereingabe empfangen wird, analysiert. Hierzu weist der Personalcomputer 2 eine Analyseeinrichtung 21 auf. Dabei wird der Programmcode 5 insbesondere auf das Funktionsmuster 6 hin analysiert. Das Funktionsmuster 6 kann unvollständig in den Programmcode 5 implementiert sein. Beispielsweise weist das Funktionsmuster 6 einen noch nicht implementierten Anteil 13 sowie einen bereits implementierten Anteil 14 auf. Beispielsweise findet der Verfahrensschritt S1 statt, während der Programmcode 5, insbesondere das Funktionsmuster 6, noch anhand der Nutzereingabe programmiert wird. Aus diesem Grund ist das Funktionsmuster 6 nicht vollständig.

In einem Verfahrensschritt S2 wird eine Programmfunktion 7 und/oder eine Signatur 8 der Programmfunktion 7 aus einer Datenbankeinrichtung 4 der Servereinrichtung 1 (siehe FIG 1) abgerufen. Die Programmfunktion 7 wird durch die Signatur 8 charakterisiert. Auf welche Weise die Signatur 8 die Programmfunktion 7 charakterisiert, wird später noch weiter erläutert. Die Datenbankeinrichtung 4 ist vorliegend als Funktionsbibliothek 41 ausgeführt. In der Funktionsbibliothek 41 sind neben der Programmfunktion 7 eine Vielzahl weiterer Programmfunktionen 47 gespeichert. Jede der Programmfunktionen 47 kann durch eine jeweilige weitere Signatur 48 charakterisiert sein. In dem Schritt S2 können zusätzlich die weiteren Programmfunktionen 47 und/oder deren jeweilige Signaturen 48 abgerufen werden. Die Programmfunktionen 7, 47 wurden in der Vergangenheit zum Steuern einer beliebigen Funktion eines beliebigen elektrischen Geräts programmiert. Vorzugsweise wurden die Programmfunktionen 7, 47 zudem validiert, d.h. der Funktion wurde geprüft. Somit kann Entwicklungsaufwand beim Programmieren des Programmcode 5 gespart werden, wenn eine fertige Programmfunktion 7, 47 gefunden wird, welche das Funktionsmusters 6 ersetzen kann.

In einem Verfahrensschritt S3' wird durch eine Prüfeinrichtung 22 des Personalcomputers 2 geprüft, ob die Funktion 40 des elektrischen Geräts 3 durch die Programmfunktion 7 steuerbar ist. Insbesondere wird überprüft, ob die Funktion 40 des elektrischen Geräts 3 durch die Programmfunktion 7 auf ähnliche Weise steuerbar ist, wie durch das Funktionsmuster 6 des Programmcodes 5. Diese Prüfung erfolgt durch Ermitteln eines Grads der Übereinstimmung zwischen dem Funktionsmuster 6 und der Programmfunktion 7. Der Grad der Übereinstimmung kann durch Vergleichen der Programmfunktion 7 mit dem Programmcode 5 und/oder dem Funktionsmuster 6 erfolgen. Alternativ oder zusätzlich kann der Grad der Übereinstimmung anhand der Signatur 8 sowie anhand dem Programmcode 5 und/oder dem Funktionsmuster 6 ermittelt werden.

FIG 2 zeigt in einem Blockdiagramm den Programmcode 5, das Funktionsmuster 6 und die Programmfunktion 7. Das Funktionsmuster 6 ist Teil des Programmcodes 5. Sowohl der Programmcode 5 also das Funktionsmusters 6 sind vorliegend unvollständig, d.h. nicht fertiggestellt (angedeutet durch gestrichelte Linien). Insbesondere weist der Programmcode 5 einen unvollständigen Anteil 42 auf.

Der Schritt S3' ist vorliegend zweistufig ausgeführt und in die Schritte S3 und S4 aufgeteilt. In dem Schritt S3 wird zunächst überprüft, ob die Anzahl an Eingangsgrößen 15 und Ausgangsgrößen 16 für das Funktionsmusters 6 und die Programmfunktion 7 gleich ist. Ist die Anzahl an Eingangsgrößen 15 oder die Anzahl an Ausgangsgrößen 16 unterschiedlich, so kann beispielsweise davon ausgegangen werden, dass die Programmfunktion 7 und das Funktionsmusters 6 unterschiedlich sind. Insbesondere ist in diesem Fall die Programmfunktion 7 nicht geeignet, die Funktion 40 des elektrischen Geräts 3 auf die durch den Nutzer gewünschte Weise anzusteuern. Die Anzahl der Eingangsgrößen und Ausgangsgrößen der Programmfunktion 7 kann Signatur 8 gespeichert sein. Die Anzahl der Eingangsgrößen und Ausgangsgrößen der weiteren Programmfunktionen 47 der jeweiligen weiteren Signatur 8 gespeichert sein. Die Anzahl der Eingangsgrößen und Ausgangsgrößen des Funktionsmusters 6 kann beim Analysieren in dem Schritt S1 ermittelt werden. Das Vergleichen der Anzahl an Eingangsgrößen und/oder Ausgangsgrößen ist dabei besonders einfach und wenig rechenintensiv.

In dem Schritt S4 wird beispielsweise überprüft, ob ein Wirken 10 des Funktionsmusters 6 auf die Funktion 40 des elektrischen Geräts 3 und ein Wirken 11 der Programmfunktion 7 ähnlich sind. Vorzugsweise wird der Schritt S4 nur für diejenigen der Programmfunktionen 7, 47 durchgeführt, welche die gleiche Anzahl an Eingangsgrößen und Ausgangsgrößen wie das Funktionsmusters 6 aufweisen. Beispielsweise ist das jeweilige Wirken 10, 11 dann ähnlich, wenn das jeweilige Wirken 10, 11 maximal um ein erstes weiteres vorbestimmtes Maß voneinander abweichen. Das Wirken 10, 11 kann beispielsweise umfassen, dass die Funktion 40 bei Vorliegen vorbestimmter Bedingungen auf eine vorbestimmte Art und Weise angesteuert wird. Die vorbestimmten Bedingungen können beispielsweise durch Eingangsgrößen 15 der Programmfunktion 7 und des Funktionsmusters 6 definiert werden. In diesem Fall kann das jeweilige Wirken 10, 11 dann ähnlich sein, wenn die Programmfunktion 7 und das Funktionsmuster 6 für gleiche Eingangswerte der Eingangsgrößen 15 Ausgangswerte ausgeben, die maximal um ein vorbestimmtes Maß voneinander abweichen. Mit anderen Worten bedeutet das, dass das jeweilige Wirken 10, 11 dann ähnlich ist, wenn das Funktionsmuster 6 und die Programmfunktion 7 die Funktion 40 anhand von Ausgangsgrößen 16 gleichartig ansteuern.

Beispielsweise werden der Programmfunktion 7 und dem Funktionsmuster 6 Testwerte 17 zugeführt. Die Testwerte 17 können eine Mehrzahl verschiedener Eingangswerte für die Eingangsgrößen 15 umfassen. Dabei werden der Programmfunktion 7 und im Funktionsmuster 6 anhand der Testwerte 17 jeweils die gleichen Eingangswerte zugeführt. Die Programmfunktion 7 und das Funktionsmuster 6 generieren jeweilige Ausgangswerte 18, 19 aus den Testwerten 17. Somit können die Ausgangswerte 18, 19 jeweilige Ausgangswerte der Ausgangsgrößen 16 umfassen. Beispielsweise gelten die Programmfunktion 7 und das Funktionsmusters 6 als ähnlich, wenn deren Ausgangswerte 18, 19 maximal um ein zweites weiteres vorbestimmtes Maß voneinander abweichen. Die Prüfung in dem Schritt S4 ist dabei deutlich rechenintensiver als die Prüfungen im Schritt S3. Daher ist es vorteilhaft, dass die Prüfung des Schrittes S4 nur oder zunächst für diejenigen der Programmfunktionen 7, 47 durchgeführt wird, welche aufgrund der Anzahl an Eingangsgrößen 15 und Ausgangsgrößen 16 überhaupt als geeignet infrage kommen. Wird unter den Programmfunktionen 7, 47, welche aufgrund der Anzahl an Eingangsgrößen 15 und Ausgangsgrößen 16 als geeignet infrage kommen, keine passende Programmfunktion 7 gefunden, kann die Prüfung gemäß Schritt S4 zusätzlich für die übrigen Programmfunktionen 7 unterschiedlicher Anzahl an Eingangsgrößen 15 und Ausgangsgrößen 16 durchgeführt werden.

Wird festgestellt, dass die Programmfunktion 7 und das Funktionsmuster 6 ähnlich sind, so in einem Verfahrensschritt S5 über die Ausgabeeinrichtung 23, insbesondere einen Monitor, eine Mitteilung ausgegeben werden. Mittels der Mitteilung kann dem Nutzer vorgeschlagen werden, die Programmfunktion 7 anstatt des Funktionsmusters 6 zum Steuern der Funktion 40 des elektrischen Geräts 3 zu nutzen. Dadurch kann dem Nutzer Entwicklungsaufwand zum Fertigstellen des Funktionsmusters 6 gespart werden. Beispielsweise ist es deutlich weniger Aufwand, die Programmfunktion 7 an den Programmcode 5 und/oder das elektrische Gerät 3 anzupassen, als das Funktionsmuster 6 fertig zu programmieren.

Als Teil der Mitteilung kann dem Nutzer eine Dokumentation 9 der Programmfunktion 7 übermittelt werden. In der Dokumentation 9 können Hinweise zum Implementieren der Programmfunktion 7 in den Programmcode 5 gegeben sein. Alternativ oder zusätzlich kann die Dokumentation 9 ein Eingangsverhalten und/oder Ausgangsverhalten der Programmfunktionen 7 charakterisieren. Beispielsweise beschreibt die Dokumentation 9 Art und Anzahl der Eingangsgrößen 15 und der Ausgangsgrößen 16. Die Dokumentation 9 sowie weitere Dokumentationen 49 für die weiteren Programmfunktionen 47 in der Datenbankeinrichtung 4 gespeichert sein.

Alternativ oder zusätzlich kann die Programmfunktion 7 in einem Schritt S6 zum Implementieren in den Programmcode 5 bereitgestellt werden. Das heißt die Programmfunktion 7 wird aus der Datenbankeinrichtung 4 geladen und den Nutzer zur Verfügung gestellt.

Der Personalcomputer 2 umfasst ein Speichermedium 24, auf dem ein Computerprogramm gespeichert ist, welches ausgebildet ist, die Verfahrensschritte S1 bis S6 zu steuern. Das Computerprogramm kann auf dem Personalcomputer 2 ausgeführt werden. Das Speichermedium 24 kann als Festplatte, CD oder Arbeitsspeicher ausgeführt sein.

### Bezugszeichenliste

- 1: Servereinrichtung
- 2: Personalcomputer
- 3: elektrisches Gerät
- 4: Datenbankeinrichtung
- 5: Programmcode
- 6: Funktionsmuster
- 7: Programmfunktion
- 8: Signatur
- 9: Dokumentation
- 10: Wirken
- 11: Wirken
- 13: Anteil
- 14: Anteil
- 15: Eingangsgrößen
- 16: Ausgangsgrößen
- 17: Testwerte
- 18: Ausgangswerte
- 20: Eingabevorrichtung
- 21: Analyseeinrichtung
- 22: Prüfeinrichtung
- 23: Ausgabeeinrichtung
- 24: Speichermedium
- 40: Funktion
- 41: Funktionsbibliothek
- 42: Anteil
- 47: Programmfunktionen
- 48: Signatur
- 49: Dokumentationen

## Patentansprüche

1. Verfahren zum Bereitstellen einer Programmfunktion (7) zum Steuern eines elektrischen Geräts (3), mit folgenden Schritten:
- Analysieren (S1) eines Programmcodes (5), welcher aus einer Nutzereingabe empfangen wird, auf ein Funktionsmuster (6) hin durch eine Analyseeinrichtung (21), wobei durch das Funktionsmuster (6) eine Funktion (40) des elektrischen Geräts (3) steuerbar ist,
- Abrufen (S2) der Programmfunktion (7) und/oder einer Signatur (8), welche die Programmfunktion (7) charakterisiert, aus einer Datenbankeinrichtung (4),
- Überprüfen, ob die Funktion (40) des elektrischen Geräts (3) mittels der Programmfunktion (7) steuerbar ist, durch Ermitteln (S3') eines Grads der Übereinstimmung zwischen dem Funktionsmuster (6) in dem analysierten Programmcode (5) und der Programmfunktion (7) anhand der abgerufenen Programmfunktion (7) und/oder der Signatur (8) mittels einer Prüfeinrichtung (22), und
- Ausgeben (S5) einer Meldung durch eine Ausgabeeinrichtung (23) und/oder Bereitstellen (S6) der Programmfunktion (7), wenn der Grad der Übereinstimmung zwischen der Programmfunktion (7) und dem Funktionsmuster (6) des analysierten Programmcodes (5) ein vorbestimmtes Maß überschreitet.

2. Verfahren nach Anspruch 1, **dadurch gekennzeichnet, dass** durch Ausgeben der Meldung einem Nutzer vorgeschlagen wird, die Programmfunktion (7) aus der Datenbankeinrichtung (4)zum Steuern der Funktion (40) des elektrischen Geräts (3) zu nutzen.

3. Verfahren nach einem der vorhergehenden Ansprüche, **dadurch gekennzeichnet, dass** als Teil der Meldung eine Dokumentation (9) der Programmfunktion (7) aus der Datenbankeinrichtung (4) ausgegeben wird.

4. Verfahren nach einem der vorhergehenden Ansprüche, **dadurch gekennzeichnet, dass** die Signatur (8), einen Einfluss der Programmfunktion (7) auf das elektrische Gerät (3), insbesondere basierend auf einem Eingangsverhalten und/oder Ausgangsverhalten der Programmfunktion (7), beschreibt.

5. Verfahren nach einem der vorhergehenden Ansprüche, **dadurch gekennzeichnet, dass** der Programmcode (5) während dessen Programmierung wiederholt durch die Analyseeinrichtung (21) analysiert wird.

6. Verfahren nach einem der vorhergehenden Ansprüche, **dadurch gekennzeichnet, dass** beim Analysieren des Programmcodes (5) ein unvollständiger Anteil (42) des Programmcodes (5) prognostiziert wird.

7. Verfahren nach einem der vorhergehenden Ansprüche, **dadurch gekennzeichnet, dass** beim Analysieren ein unvollständig in den Programmcode (5) implementiertes Funktionsmuster (13) prognostisch als das Funktionsmuster (6) erkannt wird.

8. Verfahren nach einem der vorhergehenden Ansprüche, **dadurch gekennzeichnet, dass** beim Analysieren des Programmcodes (5) ein Wirken (10) des Funktionsmusters (6) auf die Funktion (40) des elektrischen Geräts (3) ermittelt wird und der Grad der Übereinstimmung zwischen der Programmfunktion (7) und dem Funktionsmuster (6) höchstens dann das vorbestimmte Maß überschreitet, wenn ein jeweiliges Wirken (10, 11) des Funktionsmusters (6) und der Programmfunktion (7) auf die Funktion (40) des elektrischen Geräts (3) maximal um ein erstes weiteres vorbestimmtes Maß voneinander abweichen.

9. Verfahren nach einem der vorhergehenden Ansprüche, **dadurch gekennzeichnet, dass** beim Analysieren eine Anzahl an Eingangsgrößen (15) und/oder Ausgangsgrößen (16) für den Programmcode (5) ermittelt wird und der Grad der Übereinstimmung zwischen der Programmfunktion (7) und dem Funktionsmuster (6) höchstens dann das vorbestimmte Maß überschreitet, wenn die Anzahl an Eingangsgrößen und/oder Ausgangsgrößen der Programmfunktion und des Funktionsmusters (6) übereinstimmen.

10. Verfahren nach einem der vorhergehenden Ansprüche, **dadurch gekennzeichnet, dass** dem Programmcode (5) beim Analysieren Testwerte (17) zugeführt werden und erste Ausgangswerte (18), welche durch den Programmcode (5) aus den Testwerten (17) gebildet werden, mit zweiten Ausgangswerten (19), welche durch die Programmfunktion (7) aus den Testwerten (17) gebildet werden, verglichen werden, wobei der Grad der Übereinstimmung zwischen der Programmfunktion (7) und dem Funktionsmuster (6) höchstens dann das vorbestimmte Maß überschreitet, wenn die ersten Ausgangswerte (18) und die zweiten Ausgangwerte (19) maximal um ein zweites weiteres vorbestimmtes Maß voneinander abweichen.

11. Verfahren nach den Ansprüchen 9 und 10, **dadurch gekennzeichnet, dass** in einem zweistufigen Verfahren zunächst die Anzahl an Eingangsgrößen (15) und/oder Ausgangsgrößen (16) zwischen dem Programmcode (5) und der Programmfunktion (7) vergleichen wird und nur bei deren Übereinstimmung die ersten Ausgangswerte (18) und die zweiten Ausgangwerte (19) verglichen werden.

12. Speichermedium (24) mit einem Computerprogramm, welches dazu ausgebildet ist, ein Verfahren nach einem der vorhergehenden Ansprüche zu steuern.
